# EUROPEAN PATENT SPECIFICATION

(11) **EP 4 328 900 B1**
(45) Date of publication and mention of the grant of the patent: **24.06.2026**
(21) Application number: 23192725.2
(22) Date of filing: 22.08.2023
(51) Int. Cl.: G10H 1/00, G10H 5/00

(54) **GENERATIVE MUSIC FROM HUMAN AUDIO**
GENERATIVE MUSIK AUS MENSCHLICHEM AUDIO
MUSIQUE GÉNÉRATIVE À PARTIR D'AUDIO HUMAIN

(30) Priority: 26.08.2022 US 202217822599
(43) Date of publication of application: 28.02.2024
(73) Proprietor: Meta Platforms, Inc., Menlo Park, CA 94025 (US)
(72) Inventor: KANT, David, Menlo Park (US); WOODS, Philip, Menlo Park (US); DUPUIS, Alexander, Menlo Park (US); JAIN, Prayrit Prashu, Menlo Park (US); SRINIVASAN, Siddharth, Menlo Park (US); DUENES, Rod Alexander, Menlo Park (US)
(74) Representative: Murgitroyd & Company

(56) References cited:
- EP-A1- 3 726 521
- WO-A1-2020/251664
- US-A1- 2021 049 989
- US-A1- 2022 036 915
- PRAFULLA DHARIWAL ET AL: "Jukebox: A Generative Model for Music", ARXIV.ORG, CORNELL UNIVERSITY LIBRARY, 201 OLIN LIBRARY CORNELL UNIVERSITY ITHACA, NY 14853, 30 April 2020 (2020-04-30), XP081656139

## Description

### TECHNICAL FIELD

The present disclosure is directed to generating multi-level music from human-created sound.

### BACKGROUND

Music creation has typically been limited to those having musical training in the area of singing and/or musical instruments, and often requires multiple talented musicians and heavy editing to generate high quality music. Thus, musical synthesizers have become increasingly more popular, which allow users to generate Musical Instrument Digital Interface (MIDI)-compatible instrumental recordings without human musicians actually performing instruments. However, such synthesizers still require substantial training as they can be complex, expensive, and require some amount of musical training or experience. Further, MIDI-compatible instrumental recordings require manual generation, such as through the inputting of sheet music or the performance of the desired recording on a keyboard, which is then translated into a particular instrument.

WO 2020/251664 A1 discloses a musical generation system based on input text and lyrics and an input musical signal. EP 3 726 521 A1 proposes music generative models based on extracted feature quantities of input audio data.

### SUMMARY OF INVENTION

According to a first aspect of the invention, a method for generating multi-level music from human-created sound according to appended claim 1, and comprising:
receiving a raw audio representation of the human-created sound;
receiving one or more user steerings specifying desired properties of the multi-level music;
generating a sequence of discrete representations by encoding the raw audio representation;
converting the sequence of discrete representations to a sequence of embeddings in a same dimensionality as each other, the sequence of embeddings for example being a vector of values;
applying a machine learning model to produce a sequence of predicted embeddings based on the sequence of embeddings and based on the one or more user steerings;
generating instrument-specific code sequences corresponding to a plurality of instruments, based on the sequence of predicted embeddings; and
producing the multi-level music by converting the instrument-specific code sequences into instrument-specific audio waveforms, based on the one or more user steerings.

In some embodiments, the sequence of predicted embeddings is produced after the raw audio representation is received in full.

In the present invention, a first portion of the raw audio representation of the human-created sound is received and a corresponding part of the predicted embeddings, of the sequence of predicted embeddings, is generated before a second part of the raw audio representation of the human-created sound is received.

In some embodiments, a next predicted embedding of the sequence of predicted embeddings is produced by applying a neural network to raw audio received after a previous predicted embedding of the sequence of predicted embeddings.

In some embodiments, the machine learning model is a Long Short-Term Memory (LSTM) network.

In some embodiments, the instrument-specific code sequences are converted into instrument-specific audio waveforms via Mel spectrograms.

In some embodiments, the raw audio representation is a first raw audio representation, the sequence of discrete representations is a first sequence of discrete representations, the sequence of embeddings is a first sequence of embeddings, and the method further comprises:
receiving a second raw audio representation;
generating a second sequence of discrete representations by encoding the second raw audio representation;
converting the second sequence of discrete representations to a second sequence of embeddings in a same dimensionality as each other; and
summing the first sequence of embeddings and the second sequence of embeddings to produce a summed sequence of embeddings,
wherein the machine learning model is applied to produce the sequence of predicted embeddings based on the sequence of summed embeddings.

According to a second aspect of the invention, a computer-readable storage medium is provided storing instructions that, when executed by a computing system, cause the computing system to perform a process for generating multi-level music from human-created sound, the process comprising the method of the first aspect.

Thus for example, a computer-readable storage medium according to appended claim 9 is provided storing instructions that, when executed by a computing system, cause the computing system to perform a process for generating multi-level music from human-created sound, the process comprising:
receiving a raw audio representation of the human-created sound;
receiving one or more user steerings specifying desired properties of the multi-level music;
generating a sequence of discrete representations by encoding the raw audio representation;
converting the sequence of discrete representations to a sequence of embeddings in a same dimensionality as each other;
applying a machine learning model to produce a sequence of predicted embeddings based on the sequence of embeddings and based on the one or more user steerings; generating instrument-specific code sequences corresponding to a plurality of instruments, based on the sequence of predicted embeddings; and producing the multi-level music by converting the instrument-specific code sequences into instrument-specific audio waveforms, based on the one or more user steerings.

In some embodiments, the process further comprises receiving one or more user steerings specifying desired properties of the multi-level music, wherein the multi-level music is produced by converting the instrument-specific code sequences into the instrument-specific audio waveforms based on the one or more user steerings.

In some embodiments, the sequence of predicted embeddings is produced after the raw audio representation is received in full.

In the present invention, a first portion of the raw audio representation of the human-created sound is received and a corresponding part of the predicted embeddings, of the sequence of predicted embeddings, is generated before a second part of the raw audio representation of the human-created sound is received.

In some embodiments, a next predicted embedding of the sequence of predicted embeddings is produced by applying a neural network to raw audio received after a previous predicted embedding of the sequence of predicted embeddings.

In some embodiments, the machine learning model is a Long Short-Term Memory (LSTM) network.

In some embodiments, the instrument-specific code sequences are converted into instrument-specific audio waveforms via Mel spectrograms.

In some embodiments, the sequence of embeddings is a vector of values.

According to a third aspect of the invention, a computing system for generating multi-level music from human-created sound is provided, the computing system comprising one or more processors and one or more memories storing instructions that, when executed by the one or more processors, cause the computing system to perform a process comprising the method of the first aspect.

Thus for example, a computing system according to claim 10, for generating multi-level music from
human-created sound is provided, the computing system comprising one or more processors and one or more memories storing instructions that, when executed by the one or more processors, cause the computing system to perform a process comprising: receiving a raw audio representation of the human-created sound;
receiving one or more user steerings specifying desired properties of the multi-level music;
generating a sequence of discrete representations by encoding the raw audio representation;
converting the sequence of discrete representations to a sequence of embeddings in a same dimensionality as each other;
applying a machine learning model to produce a sequence of predicted embeddings based on the sequence of embeddings and based on the one or more user steerings; generating instrument-specific code sequences corresponding to a plurality of instruments, based on the sequence of predicted embeddings; and producing the multi-level music by converting the instrument-specific code sequences into instrument-specific audio waveforms, based on the one or more user steerings.

In some embodiments, the process further comprises receiving one or more user steerings specifying desired properties of the multi-level music, wherein the multi-level music is produced by converting the instrument-specific code sequences into the instrument-specific audio waveforms based on the one or more user steerings.

In some embodiments, the sequence of predicted embeddings is produced after the raw audio representation is received in full.

In the present invention, a first portion of the raw audio representation of the human-created sound is received and a corresponding part of the predicted embeddings, of the sequence of predicted embeddings, is generated before a second part of the raw audio representation of the human-created sound is received.

In some embodiments, the sequence of embeddings is a vector of values.

Preferred features of the various aspects of the invention will be understood to apply to other aspects by analogy.

### BRIEF DESCRIPTION OF THE DRAWINGS

Figure 1 is a block diagram illustrating an overview of devices on which some implementations can operate.
Figure 2 is a block diagram illustrating an overview of an environment in which some implementations can operate.
Figure 3 is a block diagram illustrating components which, in some implementations, can be used in a system employing the disclosed technology.
Figure 4 is a flow diagram illustrating a process used in some implementations for generating multi-level music from human-created sound.
Figure 5 is a block diagram illustrating a system used in some implementations for generating multi-level music from human-created sound.
Figure 6 is a conceptual diagram illustrating a Vector Quantized Variational Autoencoder (VQ-VAE) utilizing a codebook to encode a raw audio representation into a vector of discrete representations according to some implementations.
Figure 7 is a block diagram illustrating a Long Short Term Memory (LSTM) network used in some implementations for generating sequences of predicted embeddings for multi-level music generated from human sound.
Figure 8 is a conceptual diagram illustrating an example of an input raw audio representation of human sound and output audio waveforms corresponding to individual instruments according to some implementations.
Figure 9 is a conceptual diagram illustrating an example of a user interface having user steerings that can be selected and/or adjusted to produce instrument-specific audio waveforms according to some implementations.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to generating multi-level music from human-created sound. The technology can use a music generation platform to ingest raw audio to generate multi-level music (i.e., multiple streams corresponding to different instruments / sound types) based on user steerings, such as genre, artist, style, etc. Implementations can apply an encoder (e.g., a VQ-VAE) to take the raw audio and generate a sequence of discrete representations. Implementations can then input the sequence of discrete representations to an embedding layer that converts the sequence of discrete representations to sequences of embeddings in the same dimensionality, which are summed together to form a single sequence. The sequence of summed embeddings can be provided to a neural network (e.g., an LSTM) that produces sequences of predicted embeddings for multiple instruments, which are then used by a coder layer to generate instrument-specific code sequences. Implementations can input the instrument-specific code sequences to a decoder, which can also receive the user steerings, and convert them into Mel spectrograms, then instrument-specific audio waveforms.

In particular implementations, the raw audio input can be human-created sound (e.g., humming, beatboxing, singing) which can then be used to generate multiple user-selected corresponding instrument tracks. In some cases, the music generation can be "live," where the neural network generates the next predicted music sequence in real-time (e.g., as the user is providing the music) so the system can generate music tracks to accompany the user in real-time.

For example, a user can create an audio recording of beatboxing. Implementations can take this raw audio input and convert it into audio output that sounds like a real drum set. Implementations can further allow the user to control the sound of the drum set by specifying a genre, such as rock drums. Implementations can further add other tracks on top of the drum track, such as a guitar track, a bass track, a piano track, etc.

The disclosed technology provides improvements in the field of music generation in that musical training is not required, little to no manual input is needed, and musicians are not necessary to generate a musical composition having multiple musical instruments. Implementations can generate horizontal and vertical multi-level music corresponding to different instruments with separate tracks for each instrument that can be modified according to user steerings, such as style, genre, types of instruments, etc., based on raw audio input instead of MIDI representations. Implementations can generate the multi-level music in real-time or near real-time as raw human-created audio input is received, or after a recording of raw human-created audio input is received in full.

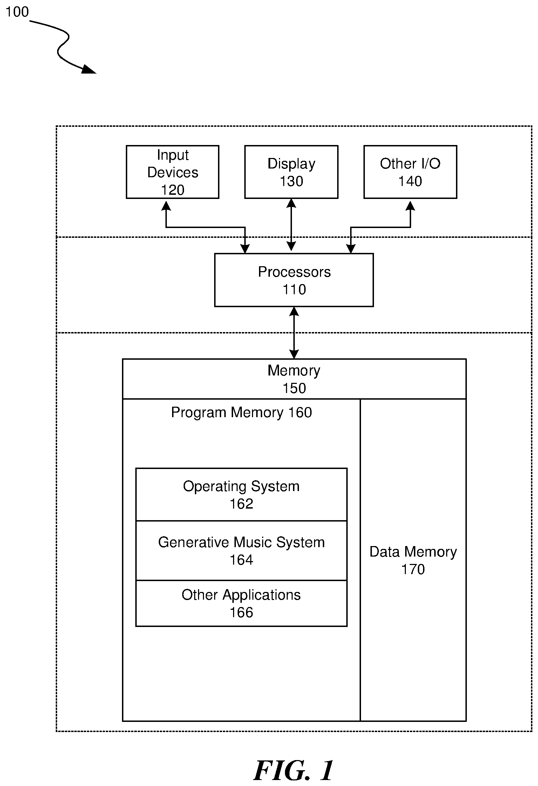

Several implementations are discussed below in more detail in reference to the figures. Figure 1 is a block diagram illustrating an overview of devices on which some implementations of the disclosed technology can operate. The devices can comprise hardware components of a device 100 that can generate multi-level music from human-created sound. Device 100 can include one or more input devices 120 that provide input to the Processor(s) 110 (e.g., CPU(s), GPU(s), HPU(s), etc.), notifying it of actions. The actions can be mediated by a hardware controller that interprets the signals received from the input device and communicates the information to the processors 110 using a communication protocol. Input devices 120 include, for example, a mouse, a keyboard, a touchscreen, an infrared sensor, a touchpad, a wearable input device, a camera- or image-based input device, a microphone, or other user input devices.

Processors 110 can be a single processing unit or multiple processing units in a device or distributed across multiple devices. Processors 110 can be coupled to other hardware devices, for example, with the use of a bus, such as a PCI bus or SCSI bus. The processors 110 can communicate with a hardware controller for devices, such as for a display 130. Display 130 can be used to display text and graphics. In some implementations, display 130 provides graphical and textual visual feedback to a user. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network card, video card, audio card, USB, firewire or other external device, camera, printer, speakers, CD-ROM drive, DVD drive, disk drive, or Blu-Ray device.

In some implementations, the device 100 also includes a communication device capable of communicating wirelessly or wire-based with a network node. The communication device can communicate with another device or a server through a network using, for example, TCP/IP protocols. Device 100 can utilize the communication device to distribute operations across multiple network devices.

The processors 110 can have access to a memory 150 in a device or distributed across multiple devices. A memory includes one or more of various hardware devices for volatile and non-volatile storage, and can include both read-only and writable memory. For example, a memory can comprise random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, generative music system 164, and other application programs 166. Memory 150 can also include data memory 170, e.g., raw audio data, user steerings data, instrument data, sequence data, multi-level music data, configuration data, settings, user options or preferences, etc., which can be provided to the program memory 160 or any element of the device 100.

Some implementations can be operational with numerous other computing system environments or configurations. Examples of computing systems, environments, and/or configurations that may be suitable for use with the technology include, but are not limited to, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

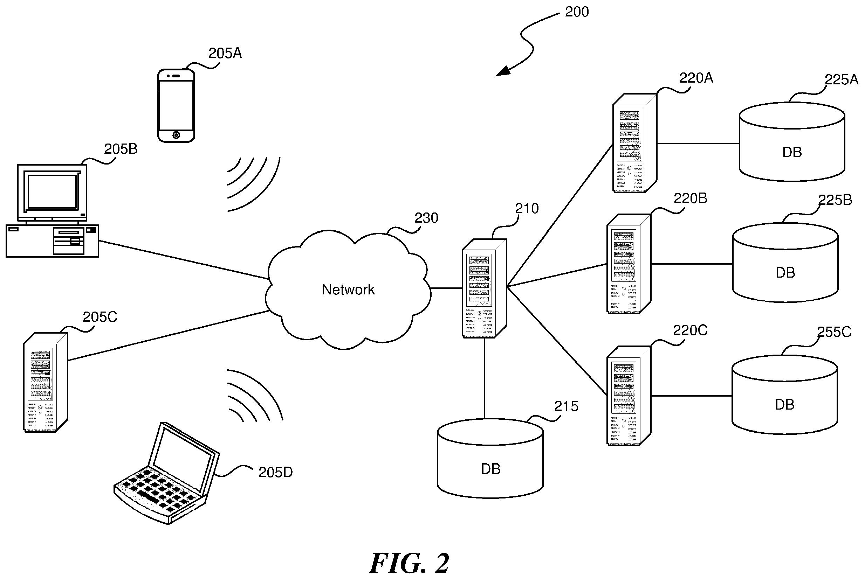

Figure 2 is a block diagram illustrating an overview of an environment 200 in which some implementations of the disclosed technology can operate. Environment 200 can include one or more client computing devices 205A-D, examples of which can include device 100. Client computing devices 205 can operate in a networked environment using logical connections through network 230 to one or more remote computers, such as a server computing device.

In some implementations, server 210 can be an edge server which receives client requests and coordinates fulfillment of those requests through other servers, such as servers 220A-C. Server computing devices 210 and 220 can comprise computing systems, such as device 100. Though each server computing device 210 and 220 is displayed logically as a single server, server computing devices can each be a distributed computing environment encompassing multiple computing devices located at the same or at geographically disparate physical locations. In some implementations, each server 220 corresponds to a group of servers.

Client computing devices 205 and server computing devices 210 and 220 can each act as a server or client to other server/client devices. Server 210 can connect to a database 215. Servers 220A-C can each connect to a corresponding database 225A-C. As discussed above, each server 220 can correspond to a group of servers, and each of these servers can share a database or can have their own database. Databases 215 and 225 can warehouse (e.g., store) information such as raw audio data, user steerings data, instrument data, sequence data, and/or multi-level music data. Though databases 215 and 225 are displayed logically as single units, databases 215 and 225 can each be a distributed computing environment encompassing multiple computing devices, can be located within their corresponding server, or can be located at the same or at geographically disparate physical locations.

Network 230 can be a local area network (LAN) or a wide area network (WAN), but can also be other wired or wireless networks. Network 230 may be the Internet or some other public or private network. Client computing devices 205 can be connected to network 230 through a network interface, such as by wired or wireless communication. While the connections between server 210 and servers 220 are shown as separate connections, these connections can be any kind of local, wide area, wired, or wireless network, including network 230 or a separate public or private network.

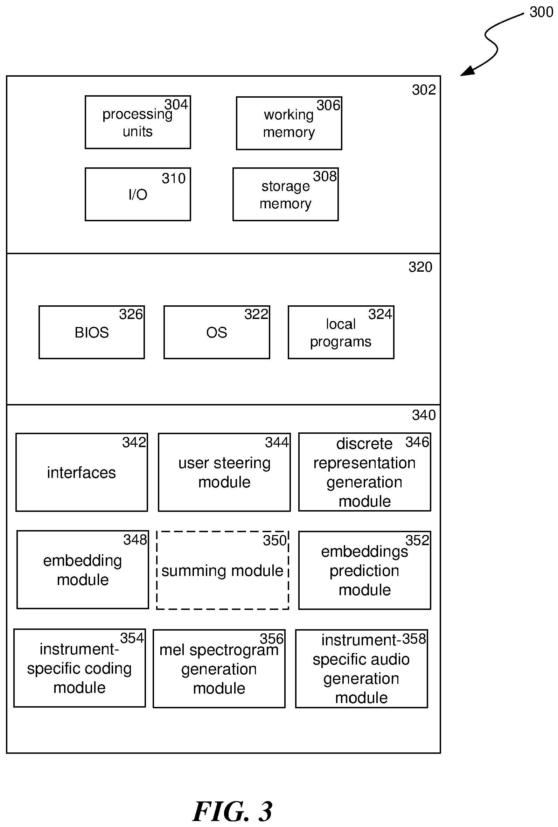

Figure 3 is a block diagram illustrating components 300 which, in some implementations, can be used in a system employing the disclosed technology. The components 300 include hardware 302, general software 320, and specialized components 340. As discussed above, a system implementing the disclosed technology can use various hardware including processing units 304 (e.g. CPUs, GPUs, APUs, etc.), working memory 306, storage memory 308 (local storage or as an interface to remote storage, such as storage 215 or 225), and input and output devices 310. In various implementations, storage memory 308 can be one or more of: local devices, interfaces to remote storage devices, or combinations thereof. For example, storage memory 308 can be a set of one or more hard drives (e.g. a redundant array of independent disks (RAID)) accessible through a system bus or can be a cloud storage provider or other network storage accessible via one or more communications networks (e.g. a network accessible storage (NAS) device, such as storage 215 or storage provided through another server 220). Components 300 can be implemented in a client computing device such as client computing devices 205 or on a server computing device, such as server computing device 210 or 220.

General software 320 can include various applications including an operating system 322, local programs 324, and a basic input output system (BIOS) 326. Specialized components 340 can be subcomponents of a general software application 320, such as local programs 324. Specialized components 340 can include user steering module 344, discrete representation generation module 346, embedding module 348, summing module 350, embeddings prediction module 352, instrument-specific coding module 354, Mel spectrogram generation module 356, instrument-specific audio generation module 358, and components which can be used for providing user interfaces, transferring data, and controlling the specialized components, such as interfaces 342. In some implementations, components 300 can be in a computing system that is distributed across multiple computing devices or can be an interface to a server-based application executing one or more of specialized components 340. Although depicted as separate components, specialized components 340 may be logical or other nonphysical differentiations of functions and/or may be submodules or code-blocks of one or more applications.

In some implementations, interfaces 342 can receive a raw audio representation of human created sound. The human created sound can be any sound generated by a human, for example, singing, humming, beatboxing, etc. The raw audio representation can be captured by any suitable audio recording device in I/O devices 310, such as a microphone or other audio recording device in operable communication with a user device capable of processing and/or transmitting the raw audio representation.

In some implementations, interfaces 342 can receive multiple raw audio representations as inputs. For example, interfaces 342 can receive an input of a raw audio representation of human-generated sound and one or more additional inputs of raw audio representations of other human-generated sounds. For example, interfaces 342 can receive a raw audio representation of singing and a raw audio representation of beatboxing. In some implementations, interfaces 342 can receive an input of a raw audio representation of human-generated sound, e.g., singing, humming, beatboxing, etc., and one or more additional inputs of raw audio representations of instrument-generated input, such as a guitar track, a drum track, a piano track, etc.

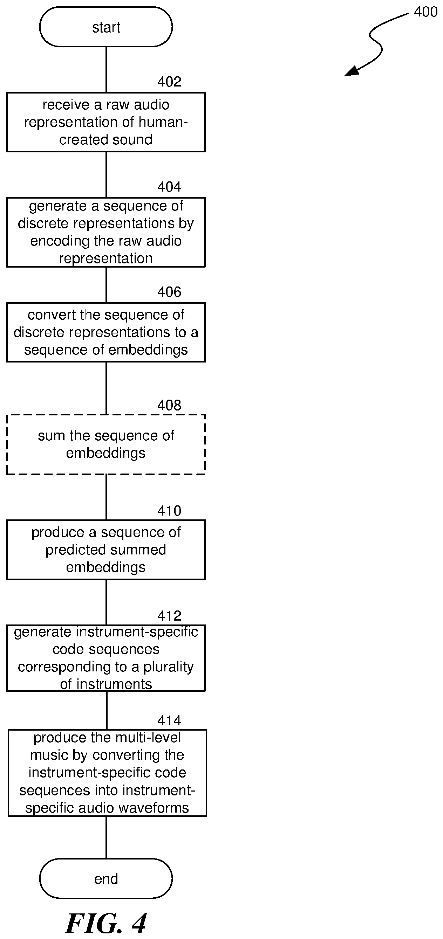

User steering module 344 can receive one or more user steerings specifying desired properties of multi-level music. The user steerings can include, for example, genre, artist, style, type of instrument, temperature, frequency penalties, etc. User steering module 344 can receive the one or more user steerings through I/O devices, such as I/O devices 310, via one or more interfaces, such as interfaces 342. Further details regarding receiving and processing user steerings are described herein with respect to Figure 4.

Discrete representation generation module 346 can generate a sequence of discrete representations by encoding the raw audio representation when interfaces 342 receive a single raw audio representation as input, or multiple sequences of discrete representations by encoding respective raw audio representations when interfaces 342 receive multiple raw audio representations. In some implementations, discrete representation generation module 346 can generate the sequence(s) of discrete representations by implementing a Vector Quantized Variation Autoencoder (VQ-VAE) that can operate on a discrete latent space by maintaining a discrete codebook. Further details regarding generating sequence(s) of discrete representations are described herein with respect to block 404 of Figure 4.

When interfaces 342 receive a single raw audio representation as input, embedding module 348 can convert the sequence of discrete representations to a sequence of embeddings in a same dimensionality, where in some cases the sequence of embeddings can be a vector of values. When interfaces 342 receive multiple raw audio representations as input, embedding module 348 can convert the sequences of discrete representations to sequences of embeddings in a same dimensionality, the sequences of embeddings being vectors of values. Specifically, embedding module 348 can compress the sequence(s) of discrete representations into a smaller feature space. Further details regarding generating sequence(s) of embeddings are described herein with respect to block 406 of Figure 4.

When interfaces 342 receive multiple raw audio representations as input, summing module 350 can sum the sequences of embeddings. Because embedding module 347 can convert the sequences of discrete representations to sequences of embeddings having the same dimensionality, summing module 350 can directly sum the sequences of embeddings. Further details regarding summing sequences of embeddings are described herein with respect to block 408 of Figure 4.

When interfaces 342 receive a single raw audio representation as input, embeddings prediction module 352 can produce a sequence of predicted summed embeddings based on the sequence of embeddings. When interfaces 342 receive multiple raw audio representations as input, embeddings prediction module 352 can produce a sequence of predicted summed embeddings based on the summed sequence of embeddings. In some implementations, embeddings prediction module 352 can produce the sequence of predicted summed embeddings after the raw audio representation(s) are received in full, i.e., are complete. In the present invention, embeddings prediction module 352 generates predicted embeddings of the sequences of predicted embeddings one at a time or a set at a time. Further details regarding producing a sequence of predicted summed embeddings are described herein with respect to block 410 of Figure 4.

Instrument-specific coding module 354 can generate instrument-specific code sequences corresponding to a plurality of instruments, based on the sequence of predicted embeddings. In some implementations, instrument-specific coding module 354 can extract different features from the sequence of predicted embeddings to generate code sequences specific to different instruments. Further details regarding generating instrument-specific code sequences are described herein with respect to block 412 of Figure 4.

Mel spectrogram generation module 356 can generate Mel spectrograms from the instrument-specific code sequences. As appreciated by one skilled in the art, Mel spectrograms can visualize sounds on the Mel scale instead of the frequency domain, and can result in unique shapes based on the sound being produced. The Mel scale is a non-linearly transformed frequency scale where sounds of equal distance from each other also sound equal distance from each other. Further details regarding generating Mel spectrograms are described herein with respect to block 414 Figure 4.

Instrument-specific audio generation module 358 can produce the multi-level music by converting the Mel spectrograms into instrument-specific audio waveforms. In some implementations, instrument-specific audio generation module 358 can include a High Fidelity Generative Adversarial Network (HiFi-GAN). In some implementations, process 400 can produce the multi-level music based on the one or more user steerings, such as artist, style, genre, type of instrument, temperature, frequency penalties, etc. Further details regarding generating instrument-specific audio waveforms are described herein with respect to block 414 of Figure 4.

Those skilled in the art will appreciate that the components illustrated in Figures 1-3 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 4 is a flow diagram illustrating a process 400 used in some implementations for generating multi-level music from human-created sound. In the present invention, process 400 is performed while raw audio representations of human-created sound are received. In some implementations, process 400 can be performed when a complete raw audio representation of human-created sound is received. In some implementations, process 400 can be performed at a later time, e.g., on a schedule or when servers and/or processors are determined to have available processing capacity.

In some implementations, process 400 can be performed locally on a user device in operable communication with a microphone or other audio input device capturing the raw audio representation of human-created sound. In some implementations, process 400 can be performed by one or more servers located remotely from a user device and from the audio input device capturing the raw audio representation. Although illustrated as having one iteration, it is contemplated that multiple instances of process 400 can be performed iteratively, consecutively, concurrently, and/or in parallel as multiple raw audio representations are received, and, as claimed in the present invention, while multiple portions of a single raw audio representation are received.

At block 402, process 400 can receive a raw audio representation of human created sound. The human created sound can be any sound generated by a human, for example, singing, humming, beatboxing, etc. The raw audio representation can be captured by any suitable audio recording device, such as a microphone or other audio recording device in operable communication with a user device capable of processing and/or transmitting the raw audio representation.

In some implementations, process 400 can receive multiple raw audio representations as inputs. For example, process 400 can receive an input of a raw audio representation of human-generated sound and one or more additional inputs of raw audio representations of other human-generated sounds. For example, process 400 can receive a raw audio representation of singing and a raw audio representation of beatboxing. In some implementations, process 400 can receive an input of a raw audio representation of human-generated sound, e.g., singing, humming, beatboxing, etc., and one or more additional inputs of raw audio representations of instrument-generated input, such as a guitar track, a drum track, a piano track, etc.

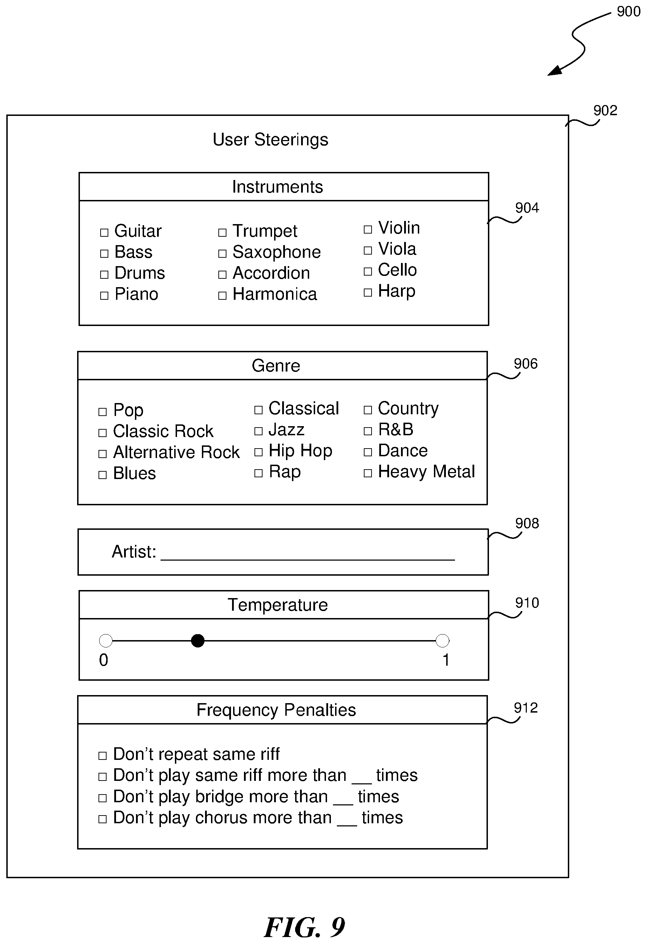

In some implementations, process 400 can receive one or more user steerings specifying desired properties of the multi-level music to be generated. The user steerings can include, for example, genre, artist, style, temperature, frequency penalties, comparable music, etc. Process 400 can receive the one or more user steerings through I/O devices, such as I/O devices 310 of Figure 3, via one or more interfaces, such as interfaces 342. An exemplary user interface for selecting user steerings is shown and described herein with respect to Figure 9.

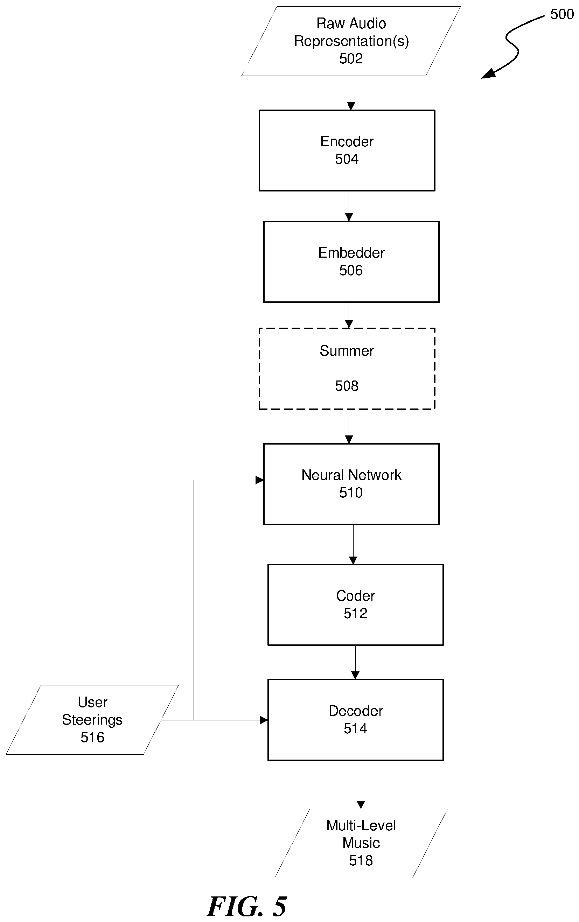

At block 404, process 400 can generate a sequence of discrete representations by encoding the raw audio representation. In some implementations, process 400 can generate the sequence of discrete representations by implementing a Vector Quantized Variation Autoencoder (VQ-VAE) that can operate on a discrete latent space by maintaining a discrete codebook. In implementations in which multiple raw audio representations are received as input, process 400 can generate multiple sequences of discrete representations by individually encoding the raw audio representations. Further details regarding encoding are described herein with respect to encoder 504 of Figure 5.

At block 406, process 400 can convert the sequence of discrete representations to a sequence of embeddings in a same dimensionality. In implementations in which multiple sequences of discrete representations are generated, process 400 can convert the sequences of discrete representations to sequences of embeddings in a same dimensionality. For example, the sequence(s) of embeddings can be in vector form. Process 400 can generate the sequence(s) of embeddings using an embedding layer, such as is described further herein with respect to embedder 506 of Figure 5.

In implementations in which multiple raw audio representations are received as input, process 400 can continue to block 408. At block 408, process 400 can sum the sequences of embeddings. For example, process 400 can sum the sequences of embeddings for each matching timestamp, the sequences of embeddings being of the same fixed size. Process 400 can sum the sequences of embeddings using a summer, such as is described further herein with respect to summer 508 of Figure 5.

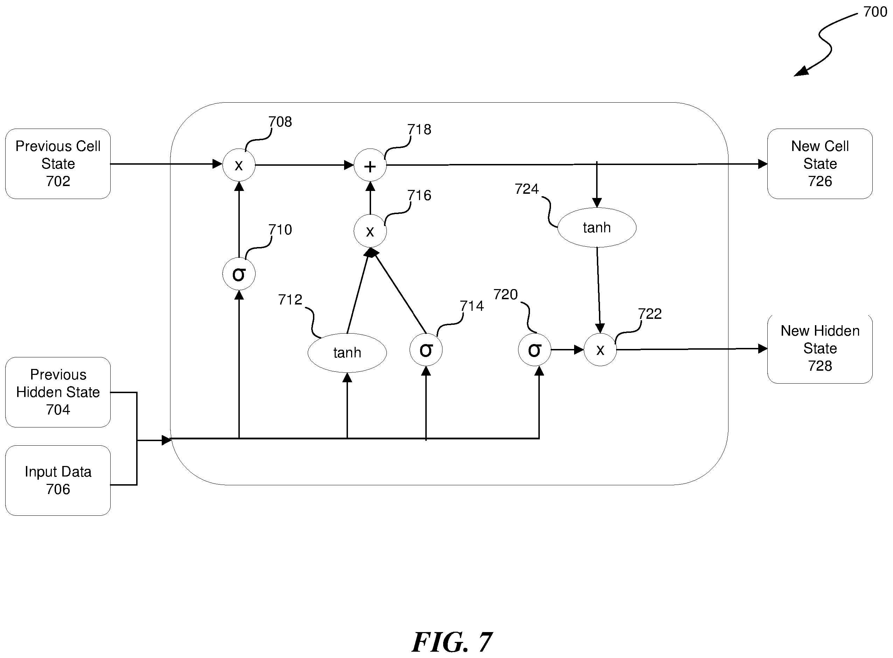

At block 410, process 400 can produce a sequence of predicted summed embeddings based on either the sequence of embeddings generated at block 406 in the case of a single inputted raw audio representation, or the summed sequence of embeddings in the case of multiple inputted raw audio representations. In some implementations, process 400 can produce the sequence of predicted summed embeddings further based on user steerings, such as, for example, genre, artist, style, type of instrument, temperature, frequency penalties, etc. Process 400 can modify how the sequence of summed embeddings is predicted based on the user steerings. For example, process 400 can predict a sequence of summed embeddings for an electronic dance music track with a high tempo and wide variation in notes, while process 400 can predict a sequence of summed embeddings for a love track with a low tempo and less dramatic variations in notes. Process 400 can produce the sequence of predicted summed embeddings using a neural network, such as neural network 510 of Figure 5. In some implementations, the neural network can be a Long Short-Term Memory (LSTM) network. Further details regarding LSTM networks are described herein with respect to Figure 7.

In some implementations, process 400 can produce the sequence of predicted summed embeddings after the raw audio representation is received in full, i.e., is complete. For example, a user can hum an entire song prior to process 400 producing the sequence of predicted summed embeddings, such that process 400 can analyze previous and future samples of the raw audio representation prior to predicting the sequence of summed embeddings in full. In any case, according to the present invention, process 400 generates predicted embeddings of the sequences of predicted embeddings one at a time or a set at a time. For example, process 400 can predict summed embeddings for a 5 second duration of humming in a song based on previous samples of the raw audio representation without considering future samples of the raw audio representation. Process 400 can produce a next predicted embedding (or set of embeddings) by applying a neural network to raw audio received after a previous predicted embedding, and/or after receiving feedback on a previous predicted embedding, e.g., by further adjustment of user steerings.

At block 412, process 400 can generate instrument-specific code sequences corresponding to a plurality of instruments, based on the sequence of summed predicted embeddings. In some implementations, process 400 can extract different features from the sequence of summed predicted embeddings to generate code sequences specific to different instruments. For example, process 400 can generate a code sequence for a drum set based on a tempo identified in the sequence of summed predicted embeddings.

At block 414, process 400 can produce the multi-level music by converting the instrument-specific code sequences into instrument-specific audio waveforms. In some implementations, process 400 can convert the instrument-specific code sequences into instrument-specific audio waveforms via Mel spectrograms. As described further herein with respect to decoder 514 of Figure 5, process 400 can translate the instrument-specific code sequences onto the Mel scale to produce Mel spectrograms, then convert the Mel spectrograms into instrument-specific audio waveforms.

In some implementations, process 400 can decode the instrument-specific code sequences according to user steerings, such as, for example, genre, artist, style, type of instrument, temperature, frequency penalties, etc. In other words, each code sequence specific to a particular instrument can be decoded in a particular manner as specified by the user steerings. For example, process 400 can decode a code sequence corresponding to a guitar in a different manner for a folk genre (e.g., as a banjo) than for a rock genre (e.g., as an electric guitar).

Figure 5 is a block diagram illustrating a system 500 used in some implementations for generating multi-level music 518 from human-created sound. System 500 can include encoder 504, embedder 506, summer 508, neural network 510, coder 512, and decoder 514. In some implementations, system 500 can be implemented on a server. In some implementations, system 500 can be implemented locally on a user device, such as a mobile device or computing device. In some implementations, some components of system 500 can be implemented locally, while other components of system 500 can be implemented remotely.

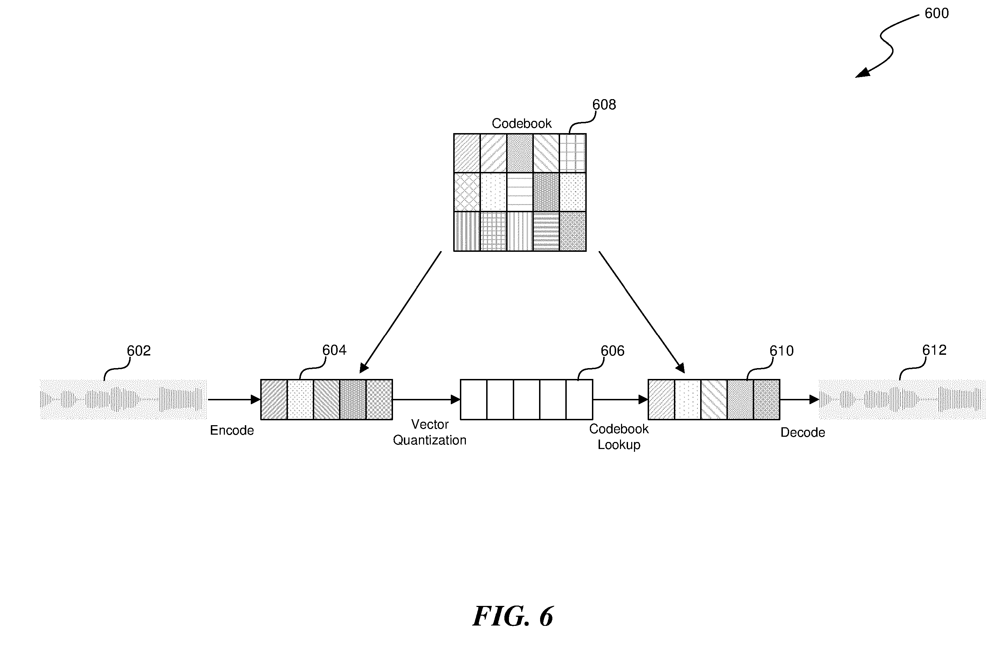

Encoder 504 can receive a raw audio representation 502 as input, i.e., a one-dimensional audio waveform signal. In some implementations, encoder 504 can receive multiple raw audio representations 502 as input, as described further herein with respect to block 402 of Figure 4. Encoder 504 can generate sequence(s) of discrete representations by encoding raw audio representation 502 using a stack of dilated one-dimensional convolutions that progressively downsample and progressively upsample raw audio representation(s) 502, depending on whether one or more raw audio representations 502 are received as input. In some implementations encoder 504 can be implemented by a Vector Quantized Variation Autoencoder (VQ-VAE). When implemented as a VQ-VAE, encoder 504 can approximate raw audio representation(s) 502 (i.e., analog signal representation(s) of continuous quantities) as discrete representations (i.e., integers) using discrete latent spaces (i.e., one or more codebooks). Encoder 504 can encode raw audio representation(s) 502 into vector(s) of discrete representations that are quantized to be closest to a codebook vector, as described further herein with respect to Figure 6. In some implementations, the discrete representations can have 1024 possible representations for each time sample of raw audio representation(s) 502.

System 500 can output the sequence(s) of discrete representations to embedder 506. Embedder 506 can embed the sequence(s) of discrete representations into the same dimensionality to generate sequence(s) of embeddings by converting the discrete representations (i.e.., integers) into vector(s) of continuous values having fixed size. When multiple raw audio representations 502 are received, system 500 can further input the sequences of embeddings to summer 508. Summer 508 can sum the sequences of embeddings, for each matching timestamp, into a single sequence of embeddings, of fixed size, across the input waveforms. It is contemplated that summer 508 is not necessary in the event that only a single raw audio representation 502 is received.

Neural network 510 can receive as input the sequence of embeddings and any user steerings 516. User steerings 516 can include, for example, genre, artist, style, type of instrument, etc. Neural network 510 can produce a sequence of predicted summed embeddings based on user steerings 516. For example, neural network 510 can generate the sequence of predicted summed embeddings to reflect a desired style of music that will be generated by system 500, such as with a high tempo for a dance track or a slower tempo for a country track. In another example, neural network 510 can generate the sequence of predicted summed embeddings to reflect a variety of instruments of different tone that will later be separated for a classical music track. In still another example, neural network 510 can receive user steerings indicating a particular artist that the multi-level music should reflect. Neural network 510 can access songs generated by the artist to extract relevant features of the music common across those songs, and generate predicted summed embeddings having similar features.

In some implementations, neural network 510 can produce the sequences of predicted embeddings after the raw audio representation(s) are received in full, i.e., are complete. In some implementations, neural network 510 can generate predicted summed embeddings of the sequence of predicted summed embeddings one at a time or a set at a time and produce a next predicted summed embedding after a previous predicted summed embedding was generated. In some implementations, neural network 510 can receive user input (e.g., further steerings and/or feedback) after each predicted embedding or set of predicted embeddings and modify a next predicted embedding or set of next predicted embeddings accordingly. In some implementations, the neural network can be a Long Short-Term Memory (LSTM) network, as described further herein with respect to Figure 7.

Coder 512 can receive as input the sequence of predicted summed embeddings and can generate instrument-specific code sequences corresponding to a plurality of instruments. For example, coder 512 can translate the sequence of predicted summed embeddings into individual code sequences for each instrument that will be included in the output. In some cases, this coding can also be based on the user steerings 516.

Decoder 514 can receive as input the instrument-specific code sequences corresponding to the plurality of instruments and any user steerings 516. In some implementations, decoder 514 can include a VQ-VAE that is trained to generate reconstructed samples from the instrument-specific code sequences. In some implementations, decoder 514 can decode the instrument-specific code sequences in different ways based on the user steerings 516. For example, decoder 514 can decode a particular code sequence in the style of a particular type of drum, guitar, etc., as specified by user steerings 516. In other words, each code sequence specific to a particular instrument can be decoded in a particular manner as specified by the user steerings. For example, process 400 can decode a code sequence corresponding to a guitar in a different manner for a folk genre (e.g., as a banjo) than for a rock genre (e.g., as an electric guitar). Although illustrated as a single decoder 514, it is contemplated that multiple decoders 514 can be implemented in system 500. For example, system 500 can include one decoder per instrument that can convert a code sequence for a particular instrument into an audio waveform for that particular instrument.

Decoder 514 can further generate Mel spectrograms based on the instrument-specific code sequences. As appreciated by one skilled in the art, Mel spectrograms can visualize sounds on the Mel scale instead of the frequency domain, and can result in unique shapes based on the sound being produced. The Mel scale is a non-linearly transformed frequency scale where sounds of equal distance from each other also sound equal distance from each other. For example, note A to note B, and note B to note C, sound equidistant from each other, i.e., one step away from each other. However, on the frequency scale, the distances between these notes can have varying frequency differences.

To generate a Mel spectrogram, decoder 514 can sample the instrument-specific code sequences with windows of a fixed size, making hops of a fixed size to sample consecutive windows. Decoder 514 can compute a Fast Fourier Transform (FFT) for each window to transform the instrument-specific code sequences from a time domain to a frequency domain, if necessary. Decoder 514 can generate a Mel scale by taking the entire frequency spectrum and separating it into "evenly spaced" frequencies, i.e., equidistant based on sound as it is heard by a human ear. Decoder 514 can generate the Mel spectrogram by decomposing the magnitude of the signal into its components on the Mel scale, resulting in an image representation of the signal.

In some implementations, decoder 514 can include a High Fidelity Generative Adversarial Network (HiFi-GAN) that can convert the Mel spectrograms into instrument-specific audio waveforms comprising multi-level music 518. In some implementations, a HiFi-GAN can include a generator, a multi-scale discriminator, and a multi-period discriminator trained adversarially. The HiFi-GAN can be a convolutional neural network that upsamples the Mel spectrograms through convolutions until the length of the output sequence matches the temporal resolution of audio waveforms.

Figure 6 is a conceptual diagram illustrating a Vector Quantized Variational Autoencoder (VQ-VAE) 600 utilizing a codebook 608 to encode a raw audio representation 602 into a vector of discrete representations 604 according to some implementations. VQ-VAE 600 can include, for example, discrete representation generation module 346 and instrument-specific audio generation module 358 of Figure 3, and/or encoder 504 and decoder 514 of Figure 5. VQ-VAE 600 can receive as input raw audio representation 602, and can classify and encode raw audio representation 602 into the vector of discrete representations 604. VQ-VAE can quantize vector of discrete representations 604 into code 606. VQ-VAE 600 can perform a lookup function on code 606 with codebook 608 to locate the codebook vector 610 closest to vector of discrete representations 604. At a later step, such as at block 414 of Figure 4, VQ-VAE 600 can receive codebook vector 410 and reconstruct audio waveform 612.

Figure 7 is a block diagram illustrating a Long Short Term Memory (LSTM) network 700 used in some implementations for generating sequences of predicted embeddings for multi-level music generated from human sound. LSTM network 700 can have feedback connections that enable it to process new data in a sequence while retaining useful information about previous data in the sequence in a manner that is contextual over a period of time.

In some implementations, in a training phase, LSTM network 700 can be trained to generate sequences of predicted summed embeddings based on user steerings. For example, for a particular genre, LSTM network 700 can analyze sequences of embeddings for known music within that genre to extract relevant features associated with the specific genre that can be used to later predict summed embeddings within that genre. LSTM network 700 can repeat training for a particular user steering until a suitable accuracy level is reached, e.g., as identified by applying a loss function, such as when a sufficient amount of training data has been processed and predicted summed embeddings made by LSTM network 700 do not deviate too far from actual results.

LSTM network 700 can receive as input previous cell state 702, previous hidden state 704, and input data 706. Previous cell state 702 can be the long-term memory of LSTM network 700. Previous hidden state 704 can be the output of LSTM network 700 at the previous point in the sequence of data, i.e., the previous predicted embedding in the sequence at the previous time step. Input data 706 can be the input data at the current time step, i.e., the embedding at the time step after the previous point in the sequence of data.

LSTM network 700 can include a forget gate including a sigmoid activated neural network 710 and pointwise multiplication 708, which together determine which components of long-term memory should be forgotten. Previous hidden state 704 and input data 706 can be input into sigmoid activated neural network 710. Sigmoid activated neural network 710 can generate a vector of values between 0 and 1 representing components of previous hidden state 704 and input data 706. The values can be closer to 0 when that component of the data is deemed less relevant and closer to 1 when that component of the data is deemed relevant. The vector of values can be input to pointwise multiplication 708 where it can be pointwise multiplied with previous cell state 702. Thus, the components of previous cell state 702 pointwise multiplied by values closer to 0, i.e., those that are deemed less relevant, have less of an impact on the ultimate output of LSTM network 700.

Previous hidden state 704 and input data 706 can further be input into a new memory network composed of a tanh activated neural network 712 that can generate a new memory update vector. The vector can consider information from input data 706 in light of the context from previous hidden state 704, and can update the components of the long-term memory of LSTM network 700 given input data 706 using a tanh function. Individual values of the vector can lie in [-1,1]; e.g., the values can be negative, thus reducing the influence of negative components in the long-term memory.

Because the new memory update vector does not consider whether input data 706 is worth remembering, LSTM network 700 can further include an input gate composed of another sigmoid activated neural network 714 Similar to sigmoid activated neural network 710, sigmoid activated neural network 714 can output a vector of values between 0 and 1, with values closer to zero being deemed less relevant and not worth remembering. The output of tanh activated neural network 712 and sigmoid activated neural network 714 can be input to pointwise multiplication 716 to identify which components of the new memory vector are relevant. The output of pointwise multiplication 716 can be added to the output of pointwise multiplication 708 at pointwise addition 718, resulting in an updated long-term memory, i.e., new cell state 726.

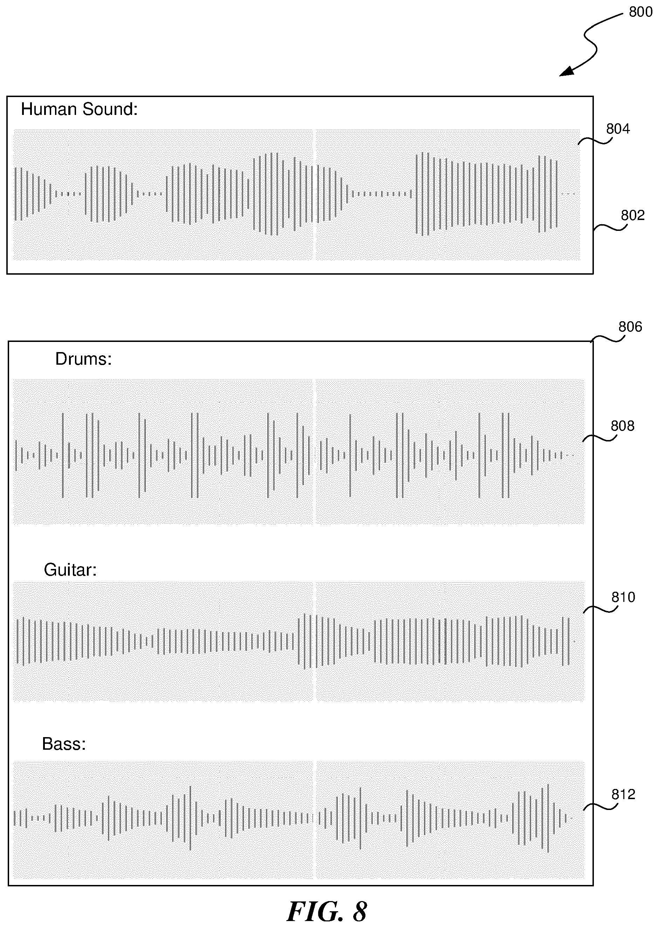

LSTM network 700 can further output new cell state 726 to an output gate that determines new hidden state 728 considering previous hidden state 704 and input data 706. Similar to sigmoid activated neural network 710 and sigmoid activated neural network 714, sigmoid activated neural network 720 can output a vector of values between 0 and 1, with values closer to zero being deemed less relevant and not worth remembering. LSTM network 700 can apply pointwise tanh 724 to new cell state 726 to force the values to lie in [-1,1]. LSTM network 700 can pointwise multiply the output of sigmoid activated neural network 720 and pointwise tanh 724 at pointwise multiplication 722 to obtain new hidden state 728, i.e., the current predicted embedding in the sequence at the current time step.Figure 8 is a conceptual diagram illustrating an example 800 of an input 802 of raw audio representation 804 of human sound and an output 806 of audio waveforms 808-812 corresponding to individual instruments according to some implementations. Some implementations can receive raw audio representation 804 as input 802 via a microphone or other audio recording device. Raw audio representation 804 can be an acoustic waveform representative of human-created sound; in this example, humming.

Based on raw audio representation 804, some implementations can generate one or more of audio waveforms 808-812 as output 806 using the systems and methods described herein. For example, some implementations can generate an audio waveform 808 corresponding to drums; an audio waveform 810 corresponding to a guitar; and an audio waveform 812 corresponding to bass. As shown in example 800, some implementations can generate separate audio waveforms 808-812 for each instrument to generate horizontal and vertical multi-level music as output 806. As described further herein with respect to Figure 9, some implementations can select which instruments to include in output 806 based on user steerings, as well as the style of those instruments based on genre, artist, etc.

Figure 9 is a conceptual diagram illustrating an example of a user interface 900 having user steerings 902 that can be selected and/or adjusted to produce instrument-specific audio waveforms according to some implementations. User steerings 902 can include, for example, instruments 904, genre 906, artist 908, temperature 910, and/or frequency penalties 912.

User interface 900 can include checkboxes that allow a user to select instruments 904 for which to produce output audio waveforms, each audio waveform corresponding to a selected instrument. For example, a user can select from guitar, bass, drunms, piano, trumpet, saxophone, accordion, harmonica, violin, viola, cello, harp, and/or any other desired instruments 904.

User interface 900 can further include checkboxes that allow a user to select a genre 906 according to which the output audio waveforms are produced. Genre 906 can include, for example, pop, classic rock, alternative rock, blues, classical, jazz, hip hop, rap, country, R&B, dance, heavy metal, and/or any other desired genre 906. Although illustrated as being separate, it is contemplated that in some implementations, a user can select a particular genre in accordance with a particular instrument, such as drums in the style of pop, and/or guitar in the style of country. User interface 900 can further include a text box that allows a user to enter an artist 908, the style of which can be used to produce the output audio waveforms.

User interface 900 can further include a slider that allows a user to control the temperature 910 of the output audio waveforms. In some implementations, temperature 910 can be a value between 0 and 1. If temperature 910 is selected to be closer to 0, the resulting output audio waveforms can be more random. If temperature 910 is selected to be closer to 1, the resulting audio waveforms can be more deterministic.

User interface 900 can further include checkboxes that allow a user to select frequency penalties 912. Frequency penalties 912 can be selected, deselected, and/or specified to control the frequency of repeated notes or sounds (or series of notes or sounds) in the output audio waveforms. For example, frequency penalties 912 can include options to not repeat the same riff, not play the same riff more than a specified number of times, not play the bridge more than a specified number of times, not play the chorus more than a specified number of times, etc.

Although illustrated as being associated with particular input mechanisms, it is contemplated that user interface 900 can include any other suitable input mechanisms to represent instruments 904, genre 906, artist 908, temperature 910, and/or frequency penalties 912, such as check boxes, text boxes, buttons, sliders, drop down boxes, etc., that can allow a user to select, deselect, and/or adjust various user steerings 902. Further, it is contemplated that user interface 900 can include any other suitable user steerings, or not all of the illustrated user steerings 902.

Although described herein with respect to raw audio input, it is contemplated that the systems and methods described herein can alternatively or additionally be applied to other types of input. For example, implementations can generate music based on other multimodal inputs, such as text, images, video, etc., by applying a model that extracts relevant features and predicts corresponding audio output.

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g. "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle specified number of items, or that an item under comparison has a value within a middle specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A method for generating multi-level music from human-created sound, the method comprising:
receiving a raw audio representation of the human-created sound (402);
receiving one or more user steerings specifying desired properties of the multi-level music (516);
generating a sequence of discrete representations by encoding the raw audio representation (404);
converting the sequence of discrete representations to a sequence of embeddings in a same dimensionality as each other (406);
applying a machine learning model to produce a sequence of predicted embeddings based on the sequence of embeddings and based on the one or more user steerings (510);
generating instrument-specific code sequences corresponding to a plurality of instruments, based on the sequence of predicted embeddings (412); and
producing the multi-level music by converting the instrument-specific code sequences into instrument-specific audio waveforms, based on the one or more user steerings (414);
**characterized in that**:
a first portion of the raw audio representation of the human-created sound is received and a corresponding part of the predicted embeddings, of the sequence of predicted embeddings, is generated before a second part of the raw audio representation of the human-created sound is received.

2. The method of claim 1, wherein the sequence of predicted embeddings is produced after the raw audio representation is received in full.

3. The method of claim 1 or claim 2, wherein a next predicted embedding of the sequence of predicted embeddings is produced by applying a neural network to raw audio received after a previous predicted embedding of the sequence of predicted embeddings.

4. The method of any preceding claim, wherein the machine learning model is a Long Short-Term Memory (LSTM) network.

5. The method of any preceding claim, wherein the instrument-specific code sequences are converted into instrument-specific audio waveforms via Mel spectrograms.

6. The method of any preceding claim, wherein the raw audio representation is a first raw audio representation, the sequence of discrete representations is a first sequence of discrete representations, the sequence of embeddings is a first sequence of embeddings, and wherein the method further comprises:
receiving a second raw audio representation;
generating a second sequence of discrete representations by encoding the second raw audio representation;
converting the second sequence of discrete representations to a second sequence of embeddings in a same dimensionality as each other; and
summing the first sequence of embeddings and the second sequence of embeddings to produce a summed sequence of embeddings,
wherein the machine learning model is applied to produce the sequence of predicted embeddings based on the sequence of summed embeddings.

7. The method of any preceding claim, further comprising:
receiving one or more user steerings specifying desired properties of the multi-level music,
wherein the multi-level music is produced by converting the instrument-specific code sequences into the instrument-specific audio waveforms based on the one or more user steerings.

8. The method of any preceding claim, wherein the sequence of embeddings is a vector of values.

9. A computer-readable storage medium storing instructions that, when executed by a computing system, cause the computing system to perform a process for generating multi-level music from human-created sound, the process comprising the method of any one of claims 1 to 8.

10. A computing system for generating multi-level music from human-created sound, the computing system comprising:
one or more processors; and
one or more memories storing instructions that, when executed by the one or more processors, cause the computing system to perform a process comprising the method of any one of claims 1 to 8.

## Patentansprüche

1. Ein Verfahren zum Erzeugen von Musik auf mehreren Ebenen aus menschengemachtem Klang, wobei das Verfahren Folgendes beinhaltet:
Empfangen einer Rohaudiodarstellung des menschengemachten Klangs (402);
Empfangen einer oder mehrerer Benutzeranweisungen, die gewünschte Eigenschaften der Musik auf mehreren Ebenen spezifizieren (516);
Erzeugen einer Sequenz von diskreten Darstellungen durch Codieren der Rohaudiodarstellung (404);
Umwandeln der Sequenz von diskreten Darstellungen in eine Sequenz von Einbettungen in einer gleichen Dimensionalität wie jede andere (406);
Anwenden eines maschinellen Lernmodells, um eine Sequenz von vorhergesagten Einbettungen basierend auf der Sequenz von Einbettungen und basierend auf der einen oder den mehreren Benutzeranweisungen zu produzieren (510);
Erzeugen von instrumentenspezifischen Codesequenzen, die einer Vielzahl von Instrumenten entsprechen, basierend auf der Sequenz von vorhergesagten Einbettungen (412); und
Produzieren der Musik auf mehreren Ebenen durch Umwandeln der instrumentenspezifischen Codesequenzen in instrumentenspezifische Audiowellenformen basierend auf der einen oder den mehreren Benutzeranweisungen (414);
**dadurch gekennzeichnet, dass**:
ein erster Abschnitt der Rohaudiodarstellung des menschengemachten Klangs empfangen wird und ein entsprechender Teil der vorhergesagten Einbettungen der Sequenz von vorhergesagten Einbettungen erzeugt wird, bevor ein zweiter Teil der Rohaudiodarstellung des menschengemachten Klangs empfangen wird.

2. Verfahren gemäß Anspruch 1, wobei die Sequenz von vorhergesagten Einbettungen produziert wird, nachdem die Rohaudiodarstellung vollständig empfangen wurde.

3. Verfahren gemäß Anspruch 1 oder Anspruch 2, wobei eine nächste vorhergesagte Einbettung der Sequenz von vorhergesagten Einbettungen durch Anwenden eines neuronalen Netzwerks auf Rohaudio produziert wird, das nach einer vorherigen vorhergesagten Einbettung der Sequenz von vorhergesagten Einbettungen empfangen wurde.

4. Verfahren gemäß einem der vorhergehenden Ansprüche, wobei das maschinelle Lernmodell ein Long-Short-Term-Memory(LSTM)-Netzwerk ist.

5. Verfahren gemäß einem der vorhergehenden Ansprüche, wobei die instrumentenspezifischen Codesequenzen über Mel-Spektrogramme in instrumentenspezifische Audiowellenformen umgewandelt werden.

6. Verfahren gemäß einem der vorhergehenden Ansprüche, wobei die Rohaudiodarstellung eine erste Rohaudiodarstellung ist, die Sequenz von diskreten Darstellungen eine erste Sequenz von diskreten Darstellungen ist, die Sequenz von Einbettungen eine erste Sequenz von Einbettungen ist und wobei das Verfahren ferner Folgendes beinhaltet:
Empfangen einer zweiten Rohaudiodarstellung;
Erzeugen einer zweiten Sequenz von diskreten Darstellungen durch Codieren der zweiten Rohaudiodarstellung;
Umwandeln der zweiten Sequenz von diskreten Darstellungen in eine zweite Sequenz von Einbettungen in einer gleichen Dimensionalität wie jede andere; und
Summieren der ersten Sequenz von Einbettungen und der zweiten Sequenz von Einbettungen, um eine summierte Sequenz von Einbettungen zu produzieren,
wobei das maschinelle Lernmodell angewendet wird, um die Sequenz von vorhergesagten Einbettungen basierend auf der Sequenz von summierten Einbettungen zu produzieren.

7. Verfahren gemäß einem der vorhergehenden Ansprüche, das ferner Folgendes beinhaltet:
Empfangen einer oder mehrerer Benutzeranweisungen, die gewünschte Eigenschaften der Musik auf mehreren Ebenen spezifizieren,
wobei die Musik auf mehreren Ebenen durch Umwandeln der instrumentenspezifischen Codesequenzen in die instrumentenspezifischen Audiowellenformen basierend auf der einen oder den mehreren Benutzeranweisungen produziert wird.

8. Verfahren gemäß einem der vorhergehenden Ansprüche, wobei die Sequenz von Einbettungen ein Vektor von Werten ist.

9. Ein computerlesbares Speichermedium, das Anweisungen speichert, die bei Ausführung durch ein Rechensystem bewirken, dass das Rechensystem einen Prozess zum Erzeugen von Musik auf mehreren Ebenen aus menschengemachtem Klang durchführt, wobei der Prozess das Verfahren gemäß einem der Ansprüche 1 bis 8 beinhaltet.

10. Ein Rechensystem zum Erzeugen von Musik auf mehreren Ebenen aus menschengemachtem Klang, wobei das Rechensystem Folgendes beinhaltet:
einen oder mehrere Prozessoren; und
einen oder mehrere Speicher, die Anweisungen speichern, die bei Ausführung durch den einen oder die mehreren Prozessoren bewirken, dass das Rechensystem einen Prozess durchführt, der das Verfahren gemäß einem der Ansprüche 1 bis 8 beinhaltet.

## Revendications

1. Un procédé pour la génération de musique multi-niveaux à partir d'un son créé par l'homme, le procédé comprenant :
la réception d'une représentation audio brute du son créé par l'homme (402) ;
la réception d'un ou de plusieurs guidages utilisateur spécifiant des propriétés souhaitées de la musique multi-niveaux (516) ;
la génération d'une séquence de représentations discrètes par codage de la représentation audio brute (404) ;
la conversion de la séquence de représentations discrètes en une séquence d'incorporations dans une même dimensionnalité les unes que les autres (406) ;
l'application d'un modèle d'apprentissage machine pour produire une séquence d'incorporations prédites sur la base de la séquence d'incorporations et sur la base des un ou plusieurs guidages utilisateur (510) ;
la génération de séquences de code spécifiques à un instrument correspondant à une pluralité d'instruments, sur la base de la séquence d'incorporations prédites (412) ; et
la production de la musique multi-niveaux par conversion des séquences de code spécifiques à un instrument en formes d'onde audio spécifiques à un instrument, sur la base des un ou plusieurs guidages utilisateur (414) ;
**caractérisé en ce que** :
une première portion de la représentation audio brute du son créé par l'homme est reçue et une partie correspondante des incorporations prédites, de la séquence d'incorporations prédites, est générée avant qu'une deuxième partie de la représentation audio brute du son créé par l'homme ne soit reçue.

2. Le procédé de la revendication 1, dans lequel la séquence d'incorporations prédites est produite après que la représentation audio brute a été intégralement reçue.

3. Le procédé de la revendication 1 ou de la revendication 2, dans lequel une incorporation prédite suivante de la séquence d'incorporations prédites est produite par application d'un réseau neuronal à de l'audio brut reçu après une incorporation prédite précédente de la séquence d'incorporations prédites.

4. Le procédé de n'importe quelle revendication précédente, dans lequel le modèle d'apprentissage machine est un réseau de mémoire à long et court terme (LSTM).

5. Le procédé de n'importe quelle revendication précédente, dans lequel les séquences de code spécifiques à un instrument sont converties en formes d'onde audio spécifiques à un instrument via des spectrogrammes mel.

6. Le procédé de n'importe quelle revendication précédente, dans lequel la représentation audio brute est une première représentation audio brute, la séquence de représentations discrètes est une première séquence de représentations discrètes, la séquence d'incorporations est une première séquence d'incorporations, et le procédé comprenant en outre :
la réception d'une deuxième représentation audio brute ;
la génération d'une deuxième séquence de représentations discrètes par codage de la deuxième représentation audio brute ;
la conversion de la deuxième séquence de représentations discrètes en une deuxième séquence d'incorporations dans une même dimensionnalité les unes que les autres ; et
la sommation de la première séquence d'incorporations et de la deuxième séquence d'incorporations pour produire une séquence sommée d'incorporations,
dans lequel le modèle d'apprentissage machine est appliqué pour produire la séquence d'incorporations prédites sur la base de la séquence d'incorporations sommées.

7. Le procédé de n'importe quelle revendication précédente, comprenant en outre :
la réception d'un ou de plusieurs guidages utilisateur spécifiant des propriétés souhaitées de la musique multi-niveaux,
dans lequel la musique multi-niveaux est produite par conversion des séquences de code spécifiques à un instrument en les formes d'onde audio spécifiques à un instrument sur la base des un ou plusieurs guidages utilisateur.

8. Le procédé de n'importe quelle revendication précédente, dans lequel la séquence d'incorporations est un vecteur de valeurs.

9. Un support de stockage lisible par ordinateur stockant des instructions qui, lorsqu'elles sont exécutées par un système informatique, amènent le système informatique à effectuer un processus pour la génération de musique multi-niveaux à partir d'un son créé par l'homme, le processus comprenant le procédé de l'une quelconque des revendications 1 à 8.

10. Un système informatique pour la génération de musique multi-niveaux à partir d'un son créé par l'homme, le système informatique comprenant :
un ou plusieurs processeurs ; et
une ou plusieurs mémoires stockant des instructions qui, lorsqu'elles sont exécutées par les un ou plusieurs processeurs, amènent le système informatique à effectuer un processus comprenant le procédé de l'une quelconque des revendications 1 à 8.
